# FASCICULE DE BREVET EUROPEEN

(11) **EP 1 055 848 B1**
(45) Date de publication et mention de la délivrance du brevet: **25.08.2004**
(21) Numéro de dépôt: 99201678.2
(22) Date de dépôt: 26.05.1999
(51) Int. Cl.: F16J 15/30, F16J 15/40, F16J 15/44

(54) **Dispositif de joint d'étanchéite d'enceinte de palier de turbomachine avec portance**
Dichtungsanordnung mit Auftrieb für Turbomaschinenlagergehäuse
Sealing arrangement with lift for a turbomachine bearing chamber

(43) Date de publication de la demande: 29.11.2000
(73) Titulaire: Techspace Aero, 4041 Milmort Herstal (BE)
(72) Inventeur: Tran, Quac Hung, 4020 Liège (BE); Pacchioni, Lorenzo, 4690 Roclenge/S/Geer (BE)
(74) Mandataire: Berrou, Paul

(56) Documents cités:
- EP-A- 0 387 122
- EP-A- 0 491 624
- EP-A- 0 818 607
- US-A- 3 874 677

## Description

L'invention concerne un dispositif de joint d'étanchéité radial, avec portance, d'enceinte de palier de turbomachine.

De manière courante, un palier de turbomachine supportant un arbre tournant à l'intérieur d'un carter fixe comporte un roulement disposé dans une enceinte où sa lubrification est assurée. Par contre, toute migration d'huile doit être évitée vers certains compartiments de la turbomachine et l'étanchéité doit ainsi être assurée à la séparation entre l'enceinte de palier contenant de l'huile et une enceinte voisine à l'air qui doit être maintenue exempte d'huile.

Diverses solutions ont été mises en oeuvre dans ce but. Des joints à labyrinthe ont ainsi été utilisés et présentent l'intérêt de leur simplicité de fabrication et d'une longue durée de vie. Toutefois ils peuvent occasionner des fuites d'air importantes préjudiciables aux performances et les balourds de l'arbre peuvent entraîner des détériorations.

Il en résulte une augmentation des consommations d'huile entraînée par l'air vers les déshuileurs air - huile et des fuites d'huile restent possibles de l'enceinte à huile vers l'enceinte à l'air.

D'autres solutions utilisent des joints en carbone associés à diverses modalités de mise en place. Notamment, EP-A-0 387 122 illustre un exemple de réalisation de joint radial segmenté avec contact et un autre exemple est montré par EP-A-0 562 895. On note que l'utilisation de joints axiaux ou radiaux avec contacts réduit largement les fuites d'air vers les enceintes à huile et en conséquence la consommation d'huile après le passage à travers un déshuileur. Cependant les répercussions des balourds de l'arbre ne sont pas maîtrisées et des usures résultent de frottements importants, ce qui limite les durées de vie de ces joints, fréquemment de l'ordre du millier d'heures et insuffisantes pour les applications visées par la présente invention.

On connait par EP-A-0 818 607 un dispositif de joint d'étanchéité conforme au préambule de la revendication 1, comprenant un joint à labyrinthe monté sur la partie de manchon solidaire de l'arbre située du coté de l'enceinte à air et, en série, un joint radial segmenté monté sur la partie de manchon solidaire de l'arbre situé du coté de l'enceinte à huile, et constitué d'un anneau de segments de carbone qui sont maintenus ensemble à l'aide d'un ressort circonférentiel, ce ressort serrant les segments contre le manchon à l'arrêt, sur le manchon. En outre, US-A-3 874 677 montre un joint d'étanchéité comportant des rainures de portance ménagées sur la surface cylindrique de l'arbre de telle sorte qu'en fonctionnement un film d'air en surpression se présente entre la surface du manchon et la surface de l'anneau de carbone et ainsi les sépare, l'étanchéité dynamique axiale étant donc réalisée mais aucun frottement n'étant possible. La solution proposée par l'invention évite les divers inconvénients des solutions connues antérieures tout en assurant l'étanchéité recherchée entre une enceinte à air et une enceinte à huile.

Selon l'invention un dispositif de joint d'étanchéité de palier de turbomachine du type précité tel que décrit dans le préambule de la revendication 1 est caractérisé en ce que la surface tournante coopérant avec l'anneau de carbone comporte des rainures de portance de manière à assurer une étanchéité dynamique en fonctionnement sans frottement entre les faces cylindriques, et en ce qu'une cale de réglage associée à des vis, disposée entre le support et l'élément de carter assure la position axiale de l'anneau de carbone par rapport à la surface tournante et les rainures de portance.

Avantageusement, l'anneau de carbone est maintenu dans une enveloppe métallique et bloqué tangentiellement, au niveau de chaque segment, à l'aide de goupilles montées sur cette enveloppe.

L'anneau de carbone est poussé axialement par des ressorts, au niveau de chaque segment, contre la face verticale de l'enveloppe pour réaliser une étanchéité statique radiale.

Un mécanisme de refoulement d'huile est monté sur l'enveloppe métallique du joint du coté de l'enceinte d'huile pour éviter la venue des particules d'huile aux segments de carbone au niveau des étanchéité statique et dynamique.

Ces dispositions remarquables selon l'invention permettent d'atteindre les buts recherchés. Notamment, la fuite d'air de l'enceinte à air vers l'enceinte à huile est très réduite, ce qui permet de contrôler la consommation d'huile et d'éviter une influence néfaste sur les performances. La fuite d'huile de l'enceinte à huile vers l'enceinte à air est évitée, ce qui permet de ne pas polluer l'air utilisé dans les prélèvements d'avion. En supprimant le frottement, les échauffements de joint sont évités et les détériorations et/ou usure qui en résultent. Les durées de vie de joints sont donc notablement allongées. En outre, le dispositif est très peu sensible aux balourds qui peuvent apparaître sur l'arbre. D'autres caractéristiques et avantages de l'invention seront mieux compris à la lecture de la description qui va suivre d'un mode de réalisation de l'invention, en référence aux dessins annexés sur lesquels :
la figure 1 représente, selon une vue en coupe par un plan passant par l'axe de rotation de l'arbre, une partie de palier de turbomachine comportant un dispositif de joint d'étanchéité d'enceinte conforme à l'invention ;
la figure 2 représente un détail agrandi de la figure 1 montrant le montage du joint d'étanchéité ;

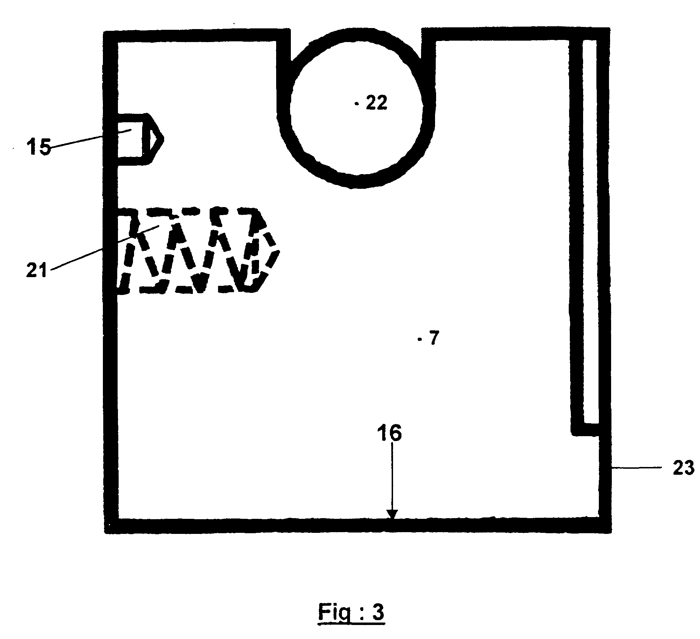

la figure 3 représente la partie statique du joint en anneau de carbone ;

Les figures 4 à 12 représentent des réalisations différentes de la partie dynamique du joint sur le manchon tournant, assurant la portance.

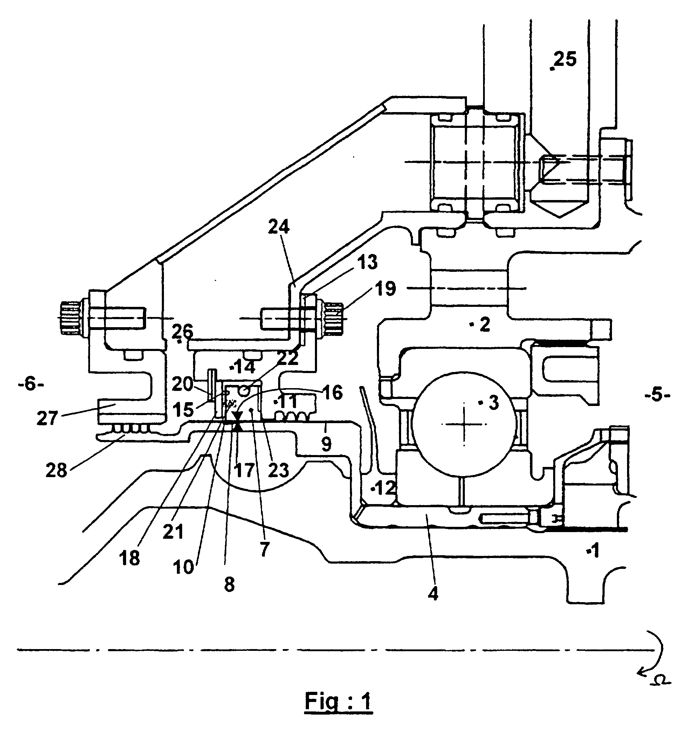

Suivant la représentation partielle donnée par la figure 1, un arbre 1 est supporté en rotation par un palier, porté par un carter 2, comportant un roulement 3. Un manchon 4 solidarisé en rotation à l'arbre 1 est interposé entre le roulement 3 et l'arbre 1, suivant des dispositions connues en soi dans l'application aux turbomachines. Le roulement 3 est compris dans une enceinte 5 où sont présents à la fois de l'air et de l'huile en vue de la lubrification du roulement 3 assurée de manière connue en soi et qui n'a pas été représentée en détails sur les dessins. Dans l'application à une turbomachine visée par l'invention, au-delà du palier de support, l'arbre 1 est entouré d'une enceinte 6 dite à air et qui doit rester exempte d'huile car toute remontée d'huile dans certains compartiments de la turbomachine serait préjudiciable à un bon fonctionnement. Divers prélèvements d'air en servitudes d'avion sont effectués de manière connue en soi, exigeant l'utilisation d'un air propre et notamment exempt d'huile pour ne pas aggraver les problèmes de pressurisation et de filtration. Le dispositif d'étanchéité conforme à l'invention est ainsi disposé entre l'arbre 1 et le carter 2 de turbomachine, à la séparation entre l'enceinte à huile 5 et l'enceinte à air 6.

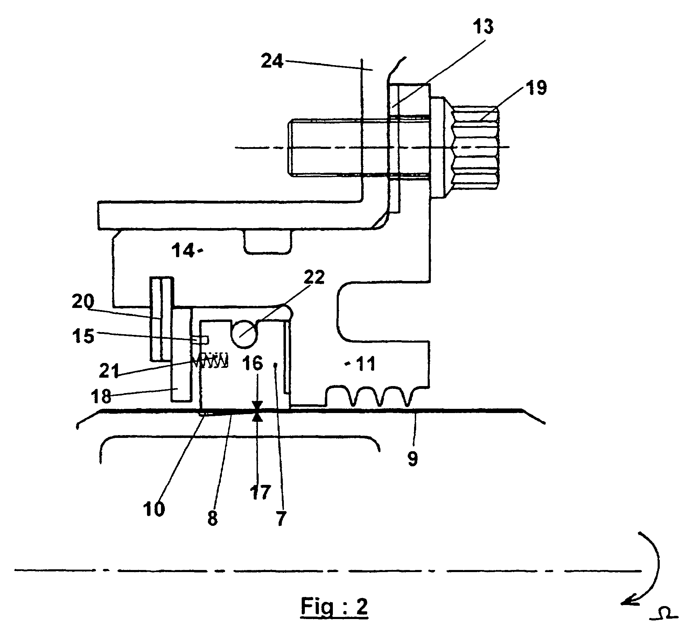

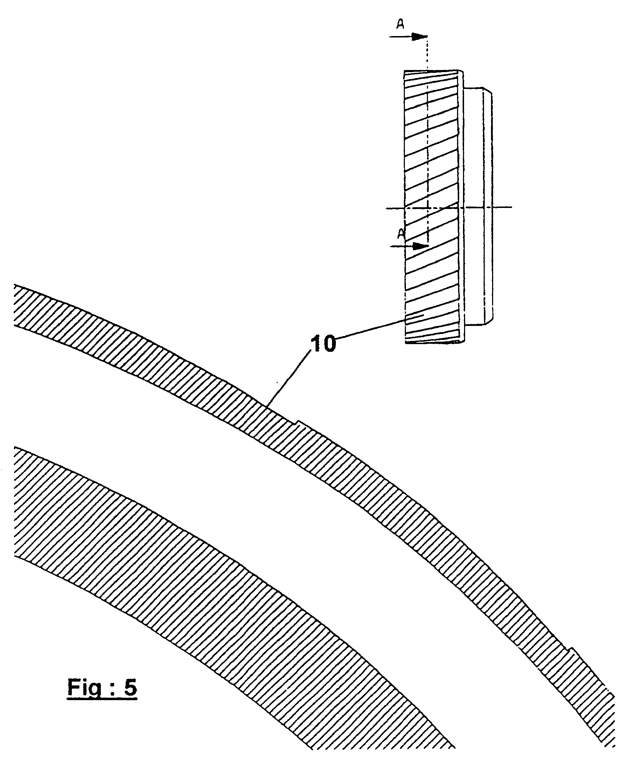

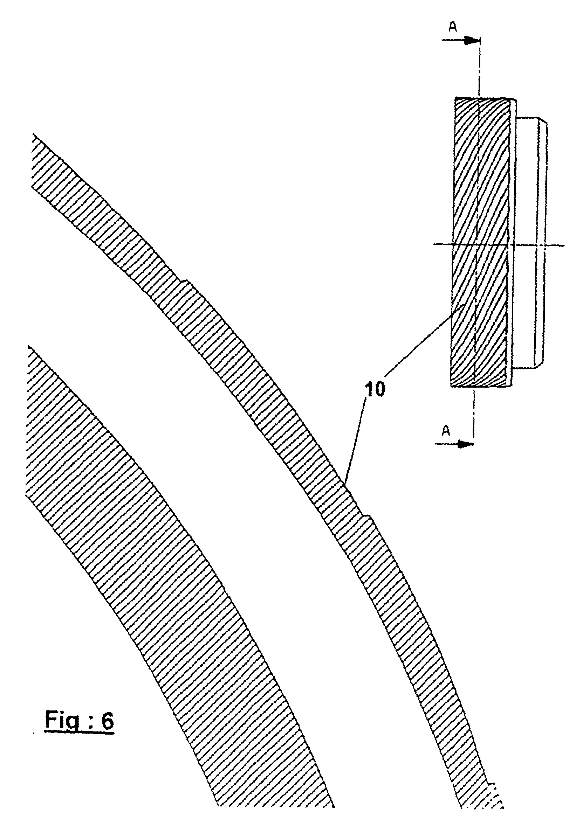

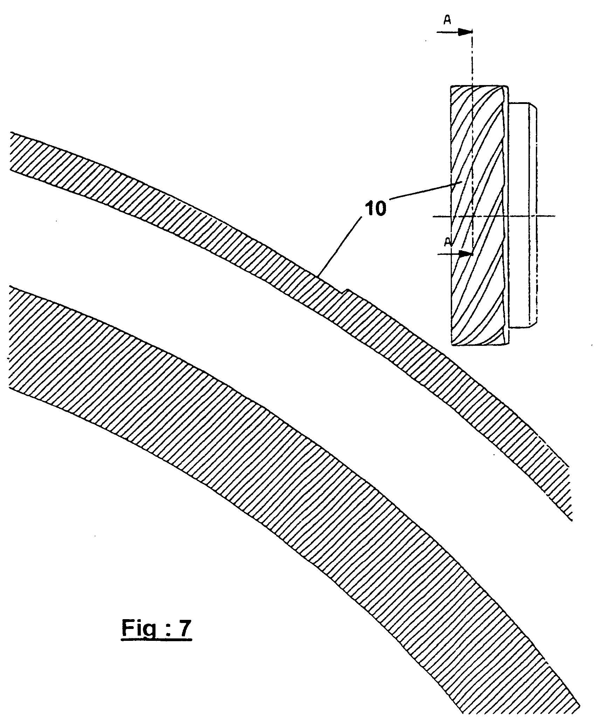

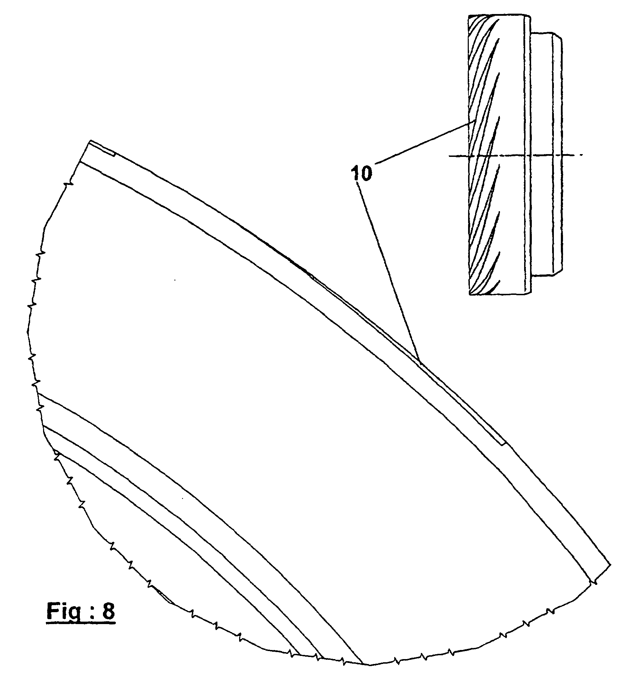

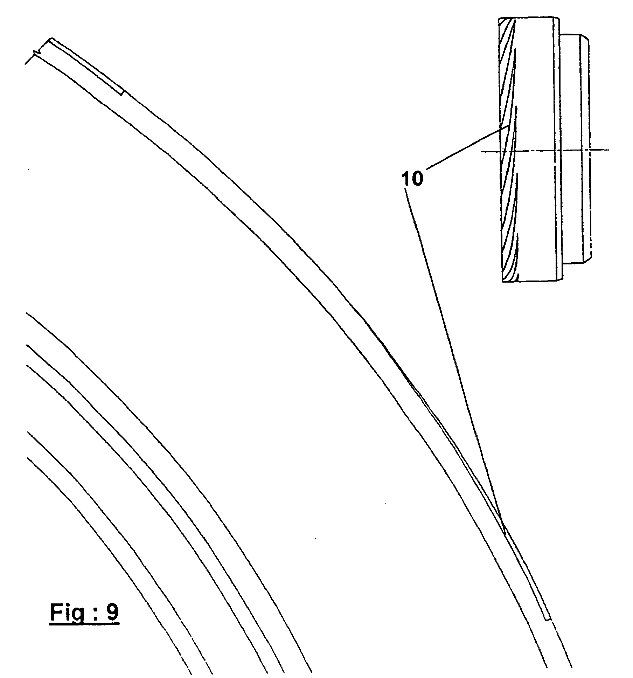

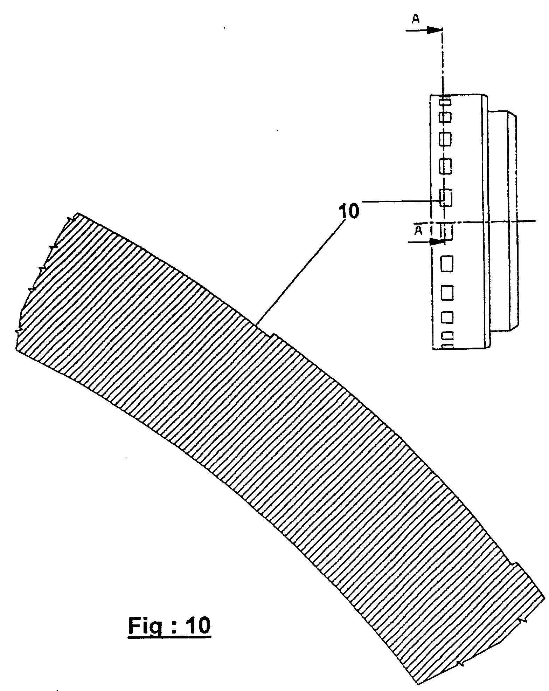

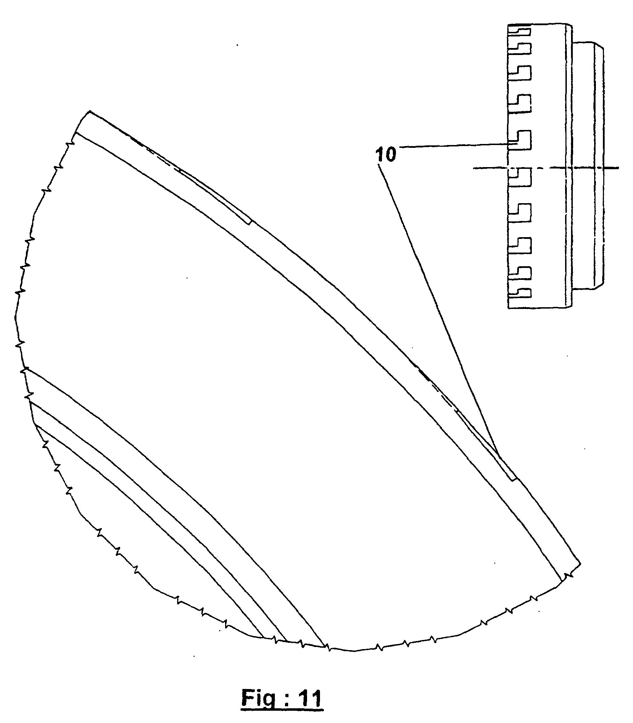

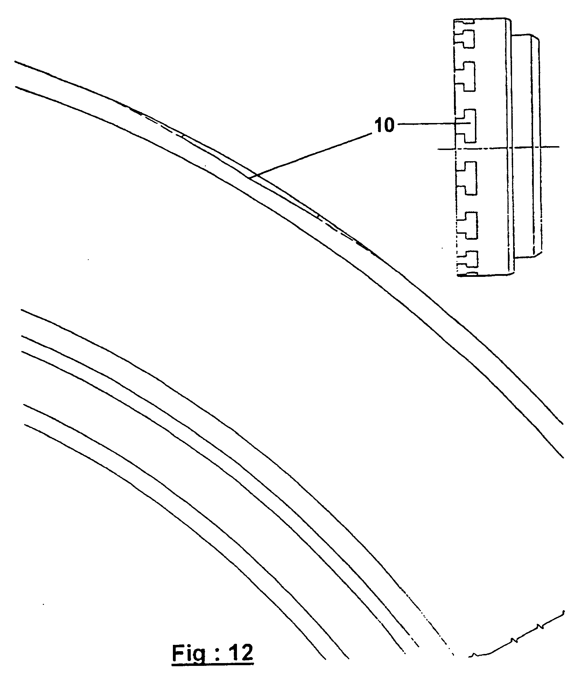

L'étanchéité principale est assurée par un joint composé d'un anneau statique de segments de carbone 7 qui sont maintenus ensemble à l'aide d'un ressort circonférentiel 22. Ce joint est associé à une surface tournante 8, avec des rainures 10 pour créer la portance. Cette première surface se prolonge par une surface cylindrique 9. Ces surfaces 8 et 9 sont revêtues de carbure. La surface 9 est en relation avec un système de refoulement d'huile à labyrinthe 11. Les détails de réalisation des rainures sont représentés sur les figures 2, 4 à 12.

La surface tournante pour créer la portance 8) du manchon 4 est centrée sans serrage sur l'arbre 1.

Le manchon 4 est maintenu en appui sur le roulement 3 par un déflecteur 12. Ce déflecteur dévie les particules d'huile en dehors du dispositif de joint d'étanchéité.

L'anneau de segments de carbone (7) est maintenu dans une enveloppe métallique de support 14 par les ressorts circonférentiel 22 et axiaux 21. Les ressorts axiaux sont appuyés par un support 18 qui est maintenu dans l'enveloppe par un joint d'arrêt 20. L'anneau de segments de carbone est bloqué tangentiellement par des goupilles 15.

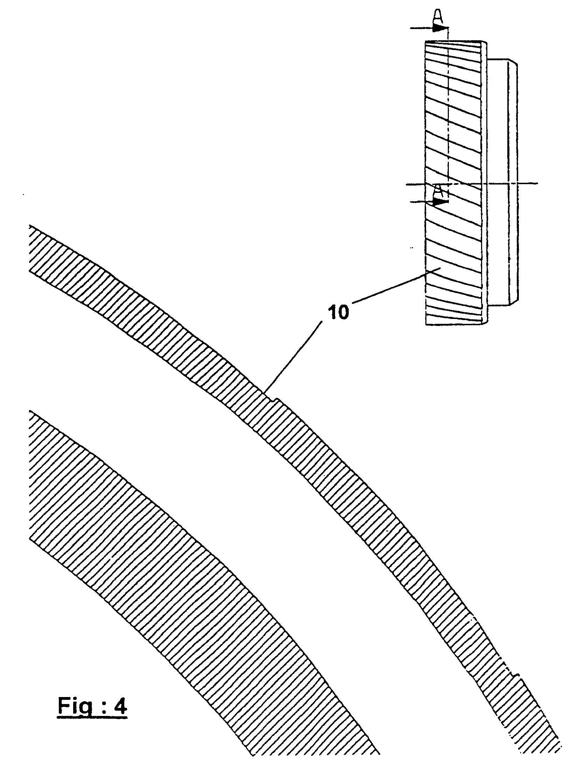

L'étanchéité dynamique est réalisée entre les faces cylindriques coopérantes respectives 16 et 17 de l'anneau de segments de carbone 7 et de la surface tournante 8 avec portance 10. Des rainures de portance (10) comme représentées sur les figures 4 à 12 sont ménagées sur la surface tournante 8 de telle sorte qu'en fonctionnement et de manière remarquable, conforme à l'invention, aucun frottement notable n'est obtenu entre les faces respectives en regard 16 et 17 de l'anneau de carbone 7 et de la surface tournante 8. Un jeu minimal est maintenu, limitant et contrôlant la fuite d'air en surpression, de l'enceinte à air 6 vers l'enceinte à huile 5. Ce jeu minimal empêche toute remontée d'huile de l'enceinte 5 du roulement vers l'enceinte à air 6.

Une cale 13 de réglage associée à des vis 19 et disposée entre le support 14 de l'anneau de carbone 7 et un couvercle 24 de carter assure la position axiale de l'anneau de carbone 7 par rapport à la surface tournante 8 avec portance 10.

En outre, à l'intérieur du support 14 sont disposés des ressorts axiaux 21 maintenus par un anneau 18 qui assure une charge axiale sur l'anneau de segments de carbone 7 de manière à réaliser l'étanchéité statique 23 entre l'anneau de segments de carbone 7 et le support 14 pour éviter toute fuite radiale.

Le support 14 porte également le mécanisme de refoulement d'huile à labyrinthe 11 en relation avec la surface cylindrique revêtue de carbure 9, coté de l'enceinte d'huile, pour éviter l'arrivée de particules d'huile sur les segments de carbone.

Un couvercle 24 fixe la partie statique du dispositif de joint d'étanchéité sur le carter de turbomachine. Sur le couvercle 24 sont fixées les conduites de pressurisation en air dont la liaison est représentée en 25 et de récupération éventuelle d'huile dont le départ est représenté en 26. Le couvercle 24 porte également la partie statique 27 d'un joint à labyrinthe 28 ménagé sur le manchon 4 dans l'enceinte à air. Ce système évite toute entrée de poussières qui pourraient atteindre l'interface entre l'anneau de carbone 7 et la surface tournante 8 avec portance 10 et nuire ainsi à l'étanchéité.

Les dispositions détaillées de l'invention qui viennent d'être décrites permettent d'assurer les résultats avantageux précédemment relevés et une parfaite intégrité des éléments du dispositif :
- équilibre des pressions obtenu autour de l'anneau de carbone 7,
- le niveau très faible des frottements exercés sur l'anneau de carbone 7,
- l'absence de rétention des particules entre l'anneau de carbone 7 et la surface tournante 8 avec portance 10,
- le jeu de fuite parfaitement calibré à l'interface entre l'anneau de carbone 7 et la surface tournante 8 avec portance 10 de manière à éviter les frottements tout en assurant la fuite d'air minimale nécessaire,
- la création d'un film d'air en surpression locale entre l'anneau le carbone 7 et la surface tournante 8 avec portance 10,
- le couplage avantageux assuré entre les aménagements de système de pressurisation en air, de récupération d'huile, la mise en place d'un joint à labyrinthe complémentaire et les modalités particulières de montage et de réglage de l'anneau de carbone et de la surface tournante forment le joint d'étanchéité.

## Revendications

1. Dispositif de joint d'étanchéité de palier de turbomachine, ledit palier comportant un roulement (3) monté entre un manchon (4) solidaire d'un arbre (1), un carter (2), un couvercle (24), le dispositif séparant une enceinte à huile (5) du roulement (3) et une enceinte à air (6) de la turbomachine comprenant un joint à labyrinthe (28) monté sur la partie de manchon (4) située du côté de l'enceinte à air (6) et, en série, un anneau statique de segments de carbone (7) ne présentant pas de contact avec le manchon (4) au niveau de la surface tournante (8), ledit anneau (7) étant bloqué axialement contre une face d'une enveloppe métallique de support (14), pour réaliser l'étanchéité statique (23), ledit anneau de segments de carbone (7) ayant une face cylindrique (16) coopérant avec une surface tournante (8) par la face cylindrique (17), **caractérisé en ce que** la surface tournante (8) coopérant avec l'anneau de carbone (7) comporte des rainures de portance (10) de manière à assurer une étanchéité dynamique en fonctionnement sans frottement entre les faces cylindriques (16, 17), et **en ce que** une cale de réglage (13) associée à des vis (19), disposée entre le support (14) et l'élément de carter (24) assure la position axiale de l'anneau de carbone (7) par rapport à la surface tournante (8) et les rainures de portance (10).

2. Dispositif de joint d'étanchéité de palier selon la revendication 1 **caractérisé en ce que** l'anneau de carbone (7) est maintenu dans une enveloppe métallique et bloqué tangentiellement, au niveau de chaque segment, à l'aide de goupilles (15).

3. Dispositif de joint d'étanchéité de palier selon l'une quelconque des revendications 1 ou 2 **caractérisé en ce que** des conduites de pressurisation en air (25) et des conduites de récupération d'huile (26) sont fixées sur le couvercle (24).

## Patentansprüche

1. Dichtungsvorrichtung für ein Turbomaschinenlager, wobei das Lager ein Wälzlager (3), das in einer mit einer Welle (1) fest verbundenen Muffe (4) sitzt, ein Gehäuse (2), einen Deckel (24) umfasst, wobei die Vorrichtung eine Öl enthaltende Kammer (5) des Wälzlagers (3) von einer Luft enthaltenden Kammer (6) der Turbomaschine trennt, wobei die Dichtungsvorrichtung eine Labyrinthdichtung (28), die an dem Teil der Muffe (4) angebracht ist, welcher sich auf der Seite der Luft enthaltenden Kammer (6) befindet, und in einer Reihe dahinter einen statischen Ring von Kohlenstoffsegmenten (7), die im Bereich der drehenden Oberfläche (8) nicht in Kontakt mit der Muffe (4) stehen, umfasst, wobei der genannte Ring (7) axial an einer Seite einer metallenen Traghülse (14) in Anschlag kommt, um die statische Dichtigkeit (23) zu gewährleisten, wobei der genannte Ring von Kohlenstoffsegmenten (7) eine zylinderförmige Seite (16) aufweist, die über die zylinderförmige Seite (17) mit einer drehenden Oberfläche (8) zusammenwirkt,
**dadurch gekennzeichnet,**
**dass** die drehende Oberfläche (8), die mit dem Kohlenstoffring (7) zusammenwirkt, Auftriebsrillen (10) dergestalt aufweist, dass im Betrieb eine dynamische Dichtigkeit ohne Reibung zwischen den zylinderförmigen Seite (16, 17) gewährleistet ist, und dass ein Einstellkeil (13), der mit Schrauben (19) verbunden ist und zwischen der Traghülse (14) und dem Gehäuseelement (24) angeordnet ist, die axiale Position des Kohlenstoffrings (7) gegenüber der drehenden Oberfläche (8) und den Auftriebsrillen (10) gewährleistet.

2. Dichtungsvorrichtung für ein Lager nach Anspruch 1,
**dadurch gekennzeichnet,**
**dass** der Kohlenstoffring (7) in einer Metallhülle sitzt und im Bereich jedes Segments mittels Stiften (15) tangential blockiert gehalten wird.

3. Dichtungsvorrichtung für ein Lager nach einem der Ansprüche 1 oder 2,
**dadurch gekennzeichnet,**
**dass** Druckluftleitungen (25) und Ölauffangleitungen (26) an dem Deckel (24) befestigt sind.

## Claims

1. Seal device for a turbo-engine bearing, the said bearing comprising a rolling bearing (3) mounted between the sleeve (4) integral with a shaft (1), a housing (2) and a cover (24), the device separating an oil chamber (5) of the bearing (3) and an air chamber (6) of the turbo-engine, comprising a labyrinth seal (28) mounted on that sleeve part (4) which is located on the air-chamber (6) side and, in series, a static ring of carbon segments (7) having no contact with the sleeve (4) in the region of the rotating surface (8), the said ring (7) being blocked axially against a face of a metal supporting casing (14), in order to achieve static sealing (23), the said ring of carbon segments (7) having a cylindrical face (16) interacting with a rotating surface (8) by means of the cylindrical face (17), **characterized in that** the rotating surface (8) which cooperates with a carbon ring (7) comprises lift grooves (10), so as to ensure dynamic sealing during operation, without friction between the cylindrical faces (16, 17), and **in that** a shim (18) assigned to screws (19) and arranged between the support (14) and the housing element (24) ensures the axial position of the carbon ring (7) in relation to the rotating surface (8) and the lift grooves (10).

2. Bearing seal device according to Claim 1, **characterized in that** the carbon ring (7) is held between a metal casing and is blocked tangentially, level with each segment, with the aid of pins (15).

3. Bearing seal device according to either of Claims 1 and 2, **characterized in that** air pressurization pipes (25) and oil recovery pipes (26) are fastened to the cover (24).
